Europäisches Patentamt

European Patent Office

Office européen des brevets

(11) Publication number : **0 558 212 A2**

# (12) EUROPEAN PATENT APPLICATION

(21) Application number : **93301057.1**

(22) Date of filing : **15.02.93**

(51) Int. Cl.$^5$ : **G01N 35/06**

(30) Priority : **26.02.92 JP 18285/92**

(43) Date of publication of application :
**01.09.93 Bulletin 93/35**

(84) Designated Contracting States :
**DE FR GB IT**

(71) Applicant : **TOA MEDICAL ELECTRONICS CO., LTD.**
**2-1, Minatojima, Nakamachi 7-chome**
**Chuoku, Kobe (JP)**

(72) Inventor : **Kobashi, Masayuki**
**401-906, 16-1, Koujidai 4-chome**
**Nishiku, Kobe (JP)**

(74) Representative : **Price, Paul Anthony King**
**D. Young & Co., 21 New Fetter Lane**
**London EC4A 1DA (GB)**

(54) Automatic analyzer with means for detecting quantity of liquid remaining.

(57) In an automatic analyzer (10), wastage of specimens and a liquid used to process each specimen is prevented by detecting the remaining quantity of the liquid, such as reagent, diluent liquid or cleaning liquid. The empty weight data (m) of a liquid container (12), and the current weight data (M) of the liquid container (12) when containing liquid, are received by an operation processor (21) of the automatic analyzer (10). The operation processor (21) determines the remaining liquid quantity (Q = M-m) of the liquid container (12) and the required liquid quantity (D) necessary for processing a specimen. By comparing both of them (Q and D), it is judged whether or not to process the specimen.

FIG.1

FIG.2

EP 0 558 212 A2

The present invention relates to an automatic analyzer having a function of detecting the remaining quantity of a liquid being used (reagent, diluent liquid, cleaning liquid, or the like).

In an automatic analyzer, liquids such as reagent and cleaning liquid are used. If these liquids are used up amid measurement, not only can the measurement not be continued in such a state, but also the measurement results cannot be obtained for the specimens being measured or in the process of reacting. Generally, a spare liquid tank is incorporated in the analyzer so that the effect does not appear immediately if an external liquid tank becomes empty.

In some automatic analyzers, it is a long time (many scores of minutes) from sampling a liquid specimen until the measurement result is produced. For example, it takes a long time for the reaction process between the liquid specimen and reagent, or for the process of measurement of the reacted liquid. The antigen-antibody reaction is one such example.

When treatment of one specimen requires a long time, the treatment process of a plurality of specimens are overlapped to improve the processing capacity.

In the case of such overlapped treatment, if the liquid is used up, the apparatus stops. If fresh liquid is then added, bubbles are formed, which may cause a measurement error. Besides, if it is required to perform the reaction process under specific conditions, the reaction time varies and a correct result is not obtained. In particular, in the case of immunological apparatus, the reaction process is conducted under strict conditions in specific circumstances. Accordingly, if the liquid runs out in the midst of operation, all specimens in the process of being treated are wasted, and the operation must be restarted from the beginning, which increases running costs and wastes time.

Hitherto, the operator checked the remaining quantity of reagents and other liquids before starting measurement, and added new liquid if it was estimated that the analyzer would run short in the midst of operation. Of course, the liquid may be replenished during measurement, but bubbles may be formed and a measuring error may result.

It is, however, bothersome to check the remaining liquid quantity, and problems were often caused when the operator forgot to check or mispredicted how much would be left at the end of the measurement operation.

Stated broadly, the present invention requires an automatic analyzer to detect the quantity of a liquid (such as a reagent) remaining in one or more liquid containers connected to the automatic analyzer, and to prohibit the start of treatment of a specimen when a liquid shortage is anticipated, thereby eliminating wastage of the specimen and the liquid.

Preferably, if a shortage is anticipated, the automatic analyzer automatically changes over to another liquid container, so that it is not necessary to delay the start of processing of the specimen.

According to a first aspect of the present invention, there is provided an automatic analyzer connectable to a liquid container, the automatic analyzer comprising: a weight sensor for measuring the current weight of the liquid container; memory means for storing empty weight data of the liquid container; remaining quantity calculating means for determining the remaining liquid quantity of the liquid container from current weight data obtained from the weight sensor and the empty weight data; setting means for setting measurement items for a specimen; required quantity calculating means for determining a required liquid quantity for the specimen, based on the measurement items set in the setting means; judging means for comparing the remaining liquid quantity determined by the remaining quantity calculating means and the required liquid quantity determined by the required quantity calculating means, and judging whether or not to process the specimen; and display means for displaying the judgement result of the judging means.

In use, if the automatic analyzer is in a casing, the liquid container may be provided either inside or outside the casing.

The remaining quantity calculating means, the required quantity calculating means and the judging means may be combined in an operation processor.

The weight data m of the empty liquid container, and the gross weight data M of the liquid container and the liquid in the container, are used to calculate the remaining liquid quantity Q (= M-m) of the liquid container.

The liquid quantity D necessary for specimen processing is determined and, by comparing both Q and D in the judging means, it is judged whether or not the specimen may be processed (treated).

According to a second aspect of the present invention, there is provided an automatic analyzer connectable to main and auxiliary liquid containers through a valve, the automatic analyzer comprising: a weight sensor for measuring the current weight of the main liquid container; memory means for storing empty weight data of the main liquid container; remaining quantity calculating means for determining the remaining liquid quantity of the main liquid container from current weight data obtained from the weight sensor and the empty weight data; setting means for setting measurement items for a specimen; required quantity calculating means for determining a required liquid quantity for the specimen, based on the measurement items set in the setting means; juding means for comparing the remaining liquid quantity determined by the remaining quantity calculating means and the required liquid quantity determined by the required quantity calculating means, and judging whether or not to process the specimen; and display means for displaying the judgement result of the judging means; wherein the judging means is arranged, when the remaining liquid quantity is greater than the required liquid quantity, to position the valve to connect the main container to the analyzer apparatus and, when the remaining liquid quantity is less than the required liquid quantity, to change over the position of the valve to connect temporarily the auxiliary liquid container to the analyzer apparatus.

In the judging means, when the remaining liquid quantity is enough, the reagent from the main liquid container is used and, when the remaining liquid quantity is not enough, the position of the valve is changed so as temporarily to use liquid from the auxiliary liquid container.

According to a third aspect of the present invention, there is provided an automatic analyzer connectable to main and auxiliary liquid containers through a valve, the automatic analyzer comprising: weight sensors for measuring the current weights of the main and auxiliary liquid containers; memory means for storing empty weight data of the main and auxiliary liquid containers; remaining quantity calculating means for determining the remaining liquid quantity of the main liquid container from current weight data obtained from one of the weight sensors and the empty weight data for the main liquid container; remaining quantity calculating means for determining the remaining liquid quantity of the auxiliary liquid container from current weight data obtained from the other weight sensor and the empty weight data for the auxiliary liquid container; setting means for setting measurement items for a specimen; required quantity calculating means for determining a required liquid quantity for the specimen, based on the measurement items set in the setting means; judging means for comparing the remaining liquid quantities determined by the two remaining quantity calculating means and the required liquid quantity determined by the required quantity calculating means, and judging whether or not to process the specimen; and display means for displaying the judgement result of the judging means; wherein the judging means is arranged, when the remaining liquid quantity of one of the liquid containers is not enough, to change over the position of the valve to connect temporarily the other reagent container to the analyzer apparatus.

When the weight of the main liquid container and the weight of the auxiliary liquid container are equal, the empty weight data are the same (i.e. $ma = mb$) and hence only one empty weight data m is required.

Non-limiting embodiments will now be described with reference to the accompanying drawings, in which:-

Fig. 1 is a schematic explanatory diagram showing an embodiment of an automatic analyzer of the invention;

Fig. 2 is a block diagram showing an example of a remaining liquid quantity detector incorporated in the automatic analyzer shown in Fig. 1;

Fig. 3 is a schematic explanatory diagram showing another embodiment of an automatic analyzer of the invention;

Fig. 4 is a block diagram showing an example of a remaining liquid quantity detector incorporated in the automatic analyzer shown in Fig. 3;

Fig. 5 is a schematic explanatory diagram showing another embodiment of an automatic analyzer of the invention;

Fig. 6 is a block diagram showing an example of a remaining liquid quantity detector incorporated in the automatic analyzer shown in Fig. 5; and

Fig. 7 is a flow chart for the automatic analyzer shown in Fig. 5.

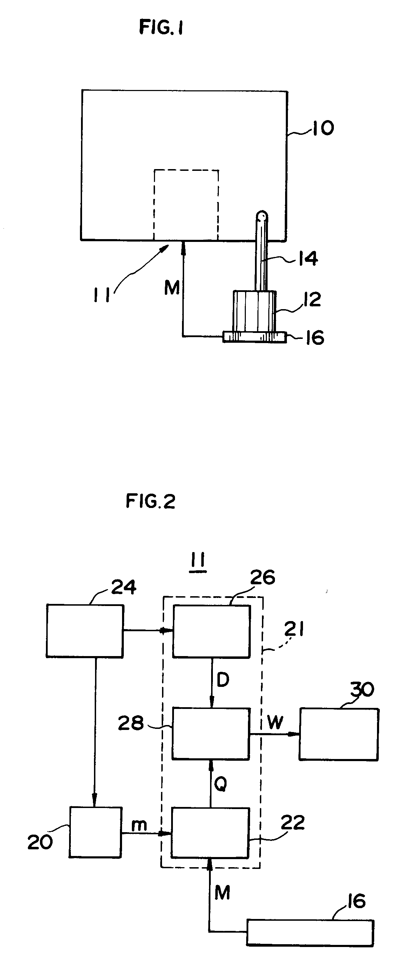

Fig. 1 shows an embodiment of an automatic analyzer of the invention, being a schematic drawing of a sample analyzer. The sample analyzer is, for example, an immunogglutination measuring apparatus for measuring trace protein in human serum by CIA method (counting immunoassay). Plural reagents are used in the immunoagglutination measuring apparatus. For example, a latex reagent for extracorporeal diagnosis, buffer solution, sheath liquid, and cleaning liquid are used. Of them, the latex reagent and buffer solution are controlled in temperature and accommodated within the analyzer. The sheath liquid and cleaning liquid of which temperature control is not necessary are installed outside the analyzer. Of course, they may be incorporated within the analyzer. Plural external reagents may be connected to the analyzer, but they are represented by one reagent in Fig. 1.

Fig. 2 is a block diagram showing an example of a remaining liquid quantity detector 11 provided in the automatic analyzer 10.

As shown in Fig. 1, the reagent container 12 containing the reagent is connected to the analyzer 10 through a tube 14, and is put on a weight sensor 16. From the weight sensor 16 to the analyzer 10, the gross weight data M of the reagent container 12 and the reagent in the container is transmitted. On the other hand, in Fig. 2, in memory means 20, the weight data m of the container only of the reagent container 12 is stored. The measurement items for each specimen are set in setting means 24. An operation processor 21 of the automatic analyzer 10 receives these pieces of information, and determines the remaining reagent quantity $Q = M-m$ in the reagent container 12, and also determines the reagent quantity D necessary for specimen processing (treatment) for the set specimen, and compares them to judge whether to process (treat) the specimen or not. The remaining reagent quantity and an alarm indicating shortage of liquid are displayed on display means 30.

The judgement is made before starting measurement and, when judged to be short of liquid, processing of the specimen is not started.

The operation processor 21 comprises, for example, remaining quantity calculating means 22, required quantity calculating means 26, and judging means 28. The remaining quantity calculating means 22 possesses a function of calculating the remaining quantity Q = M-m for the reagent container 12 from the weight data M obtained from the weight sensor 16 and the weight data m of the reagent container 12 itself. The required quantity calculating means 26 possesses a function of calculating the required reagent quantity D for the specimen as set by the setting means 24. The judging means 28 possesses a function of comparing the remaining reagent quantity Q calculated in the remaining quantity calculating means 22 and the required reagent quantity D calculated in the required quantity calculating means 26, and judging approval or disapproval of processing of the specimen.

Table 1 explains the setting means 24 and shows the screen of the display unit of the analyzer 10 in the item setting mode. In this item setting mode, the measurement items can be specified (designated) for each specimen.

Table 1

| Rack No. | Specimen No. | AFP | CEA | FRN | CA19-9 |
|---|---|---|---|---|---|
| 1-1 | 0001 | * | * | | |
| 1-2 | 0002 | * | * | | |
| 1-3 | 0003 | * | * | * | |
| 1-4 | 0004 | | | * | * |
| 1-5 | 0005 | * | | * | * |
| 2-1 | 0006 | * | * | | |
| 2-2 | 0007 | | * | | |
| 2-3 | 0008 | | * | | |
| 2-4 | 0009 | | | * | |
| 2-5 | 0010 | * | | * | * |
| E3-1 | 1001 | * | | | |
| E3-2 | 1002 | * | | | * |
| Reagent remaining quantity: 9 tests | | | | | |

In Table 1, AFP, CEA, FRN, CA 19-9 are measurement items. The rack No. indicates the specimen position. In this embodiment, five specimens are accommodated in one rack. Items are specified by entering the measurement item specifying mark of "*" in the column of the item to be measured while entering the rack No. and specimen No. The input is made by input keys. Items not required to be measured are kept blank.

At the bottom of Table 1, "Reagent remaining quantity: 9 tests" indicates that the remainder is enough for nine more tests. The number of tests is the number of measurement items. In Table 1, the number is indicated by the * marks, and 23 tests are registered (shown) in total. Supposing the reagent consumption per item to be K for each item, and assuming:

| reagent gross weight | M |
|---|---|
| reagent container weight | m |
| remaining reagent quantity | Q (=M-m) |

the number of tests that can be measured is expressed as T = Q/K.

In the column of rack No., the printed "E" mark indicates an emergency specimen. The specimen with this emergency specimen mark must be measured first. That is, specimens in rack Nos. 3-1, 3-2 (emergency specimen group) have a higher priority than the specimens in other racks (ordinary specimen group). Amongst the emergency specimens, the priority is the same, but the specimen with the earlier number has the greater priority in this case. Therefore, the priority order in Table 1 is in the sequence of rack Nos. 3-1, 3-2, 1-1, 1-2, 1-3, 1-4, 1-5, 2-1, 2-2, 2-3, 2-4, and 2-5.

Thus, after setting the measurement items, approval or disapproval of processing of each specimen is judged.

Table 2 shows the display screen after judgement of approval or disapproval of specimen processing.

Table 2

| Rack No. | Specimen No. | AFP | CEA | FRN | CA19-9 |
|---|---|---|---|---|---|
| 1-1 | 0001 | ○ | ○ | | |
| 1-2 | 0002 | ○ | ○ | | |
| 1-3 | 0003 | * | * | * | |
| 1-4 | 0004 | | | * | * |
| 1-5 | 0005 | * | | * | * |
| 2-1 | 0006 | * | * | | |
| 2-2 | 0007 | | * | | |
| 2-3 | 0008 | | * | | |
| 2-4 | 0009 | | | * | |
| 2-5 | 0010 | * | | * | * |
| E3-1 | 1001 | ○ | | | |
| E3-2 | 1002 | ○ | | | ○ |
| Reagent remaining quantity: 9 tests | | | | | |

A change from a "*" mark to an "o" mark indicates an item that can be measured as estimated from the remaining reagent quantity. It is, so to speak, a measurement enable mark. Calculating the number of tests $T_i$ for each specimen i from the highest rank of priority, $T1 + T2 + T3 + T4 = 1 + 2 + 2 + 2 = 7$ for specimen numbers 1001, 1002, 0001, 0002. Including specimen number 0003, $T1 + T2 + T3 + T4 + T5 = 1 + 2 + 2 + 2 + 3 = 10$. Seeing that $T1 + \ldots + T4 \ (= 7) < T \ (= 9) < T1 + \ldots + T5 \ (= 10)$, it is possible to measure specimens $i = 1$ to 4, that is specimen numbers 1001, 1002, 0001 and 0002.

It is possible to individually calculate the total number of tests Te for the emergency specimen group and the total number of tests Tu for the ordinary specimen group. When $Te < T < Tu$, only the emergency specimen group is measured, and the ordinary specimen group is not measured. Of course, when $Te, Tu < T$, both groups are measured.

The number of tests represents the reagent quantity and the comparison may be performed by directly using the reagent quantity. By calculating the required reagent quantity $D_i$ for each specimen i from the highest rank of priority, it may be seen that it requires $D1 + D2 + D3 + D4$ for specimen numbers 1001, 1002, 0001, 0002. Including specimen number 0003, it requires $D1 + D2 + D3 + D4 + D5$. Seeing that $D1 + \ldots + D4 < Q < D1 + \ldots + D5$, it is judged to be possible to measure specimens $i = 1$ to 4, that is, specimen numbers 1001, 1002, 0001 and 0002.

It is possible to individually calculate the total required reagent quantity De for the emergency specimen group and the total required reagent quantity Du for the ordinary specimen group. When $De < Q < Du$, only the emergency specimen group is measured, and the ordinary specimen group is not measured. Of course, when $De, Du < Q$, both groups are measured.

Summing up, the calculations may be classified as follows.

(1) The required reagent quantity data $D_i$ is determined for each set specimen i, the sum of products $\Sigma D_i$ is calculated in the sequence from the specimen of the highest rank of priority, and specimens are meas-

5

ured up to specimen p satisfying the relation of $\Sigma Di < Q$.

(2) Specimens are divided into plural groups j differing in priority, the required reagent quantity data Di is determined for each specimen i, the sum of products $\Sigma Di$ is calculated in the sequence from the specimen of the highest rank of priority, and specimens are processed up to specimen group r satisfying the relation of $\Sigma Di < Q$.

(3) The required reagent quantity data Di is determined for each set specimen i and, when the sum DT satisfies DT < Q, the specimens can be processed.

Besides, on the basis of the results of these judgements, messages such as "the reagent quantity is insufficient" and "start to measure emergency specimens 1001 to 1002 and ordinary specimens 0001 to 0002" may be displayed. Once the measurement is started, the result of measurement is sequentially shown on the display unit.

Reagent containers of different volumes may be used. When the container volume differs, the weight data m of the container itself varies, and in such a case it is necessary to judge the remaining liquid quantity by using the weight data m corresponding to the volume of the reagent container. It is preferred, in such a case, to store the weight data of plural reagent containers in the memory means 20, and to set the type of the reagent container in the setting means 24, so that the weight data corresponding to the container can be selected. Instead, the weight data m may be directly written into the memory means 20 from the setting means 24. Also, without setting the type of container in the setting means 24, it is possible to judge the type of the container from the particular gross weight M of the reagent container.

Explained so far is the case of using one reagent container for one kind of reagent. If the remaining reagent quantity is insufficient, it can be detected before running out of liquid. However, until the reagent shortage is resolved, the analyzer remains stopped, and the measurement halts (stops).

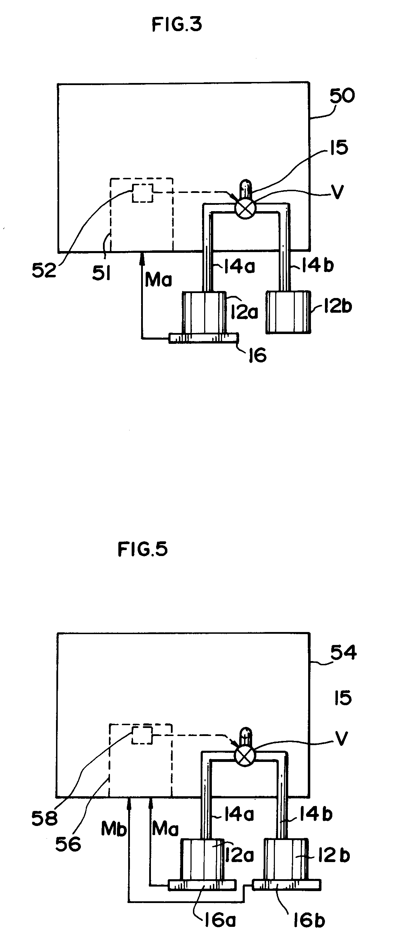

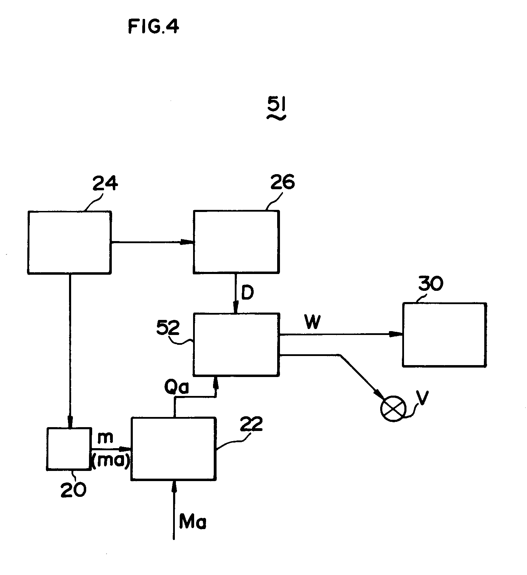

In the embodiment of Fig. 3 and Fig. 4, in addition to the main reagent container 12a, a sub (auxiliary) reagent container 12b is used. When the remaining reagent quantity Qa in the main reagent container 12a becomes zero, a valve V is changed over by a control signal from judging means 52 of a remaining quantity detector 51, and the reagent in the sub reagent container 12b is used, so that it is not necessary to stop the measurement if the liquid runs short in the main reagent container. That is, while the main reagent container 12a is being replaced with a new container, the reagent from the sub reagent container 12b can be used. When the main reagent container is replaced, the remaining reagent quantity is sufficient, and the valve is changed over to the initial state, and the reagent from the main reagent container 12a is used. The valve V permits communication between a tube 14a and a tube 15, or communication between a tube 14b and the tube 15.

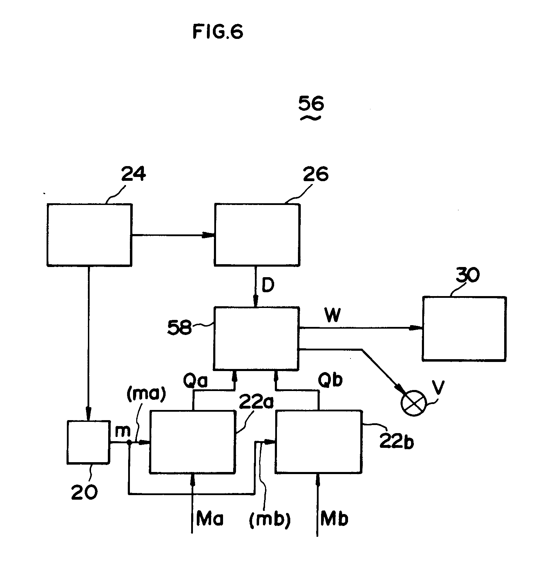

Fig. 5 shows an apparatus including a sub weight sensor 16b for measuring the weight of the sub reagent container 12b, to produce a modified version of the apparatus of Fig. 3.

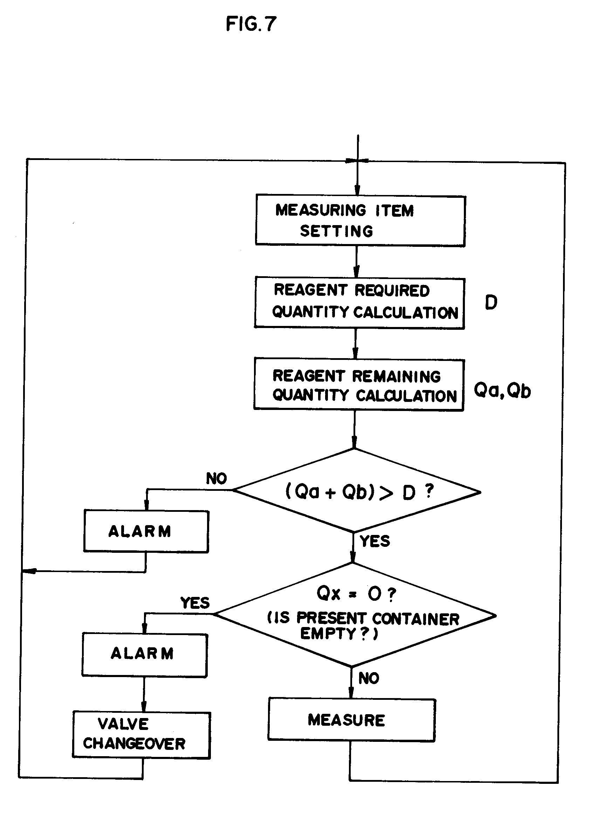

Fig. 6 is a block diagram showing an example of the remaining quantity detector 56 of Fig. 5. It is assumed that the weight of the main reagent container 12a and the weight of the sub reagent container 12b are equal to each other, that is, the same weight data m is used. Fig. 7 is a flow chart. The remaining quantity calculating means 22a, 22b calculate as follows:

$$Qa = Ma - m, Qb = Mb - m$$

The judging means 58 possesses a function of judging approval or disapproval of specimen processing, and changing over the valve V, based on the remaining reagent quantity Qa in the main reagent container 12a, the remaining reagent quantity Qb in the sub reagent container 12b, and the required reagent quantity D. Corresponding to the reagent containers 12a, 12b, the weight data ma, mb of the reagent containers are stored in the memory means 20, and the operations of Qa = Ma-mb, Qb = Mb-mb are performed in the remaining quantity calculating means 22a, 22b, respectively.

Referring then to Fig. 7, the processing (treatment) is explained below. Suppose the main reagent container 12a is being used, and that its remaining quantity Qa is small.

First, the sum of the remaining reagent quantities (Qa + Qb) and the required reagent quantity D are compared. If the sum (Qa + Qb) is smaller than the required reagent quantity D, an alarm is issued and measurement is disabled.

When the sum (Qa + Qb) is greater than the required reagent quantity D, measurement is enabled. Next it is judged whether the remaining quantity Qx in the container being used at present (in this case, the remaining quantity Qa in the main reagent container) has become zero or not. Unless the main reagent container 12a is empty, the measurement continues without changing over the valve. If the main reagent container 12a becomes empty, an alarm is issued and the valve V is changed over at the same time. That is, the sub reagent container 12b is used. Examples of alarm may include, among others, "Short of reagent" and "Decrease measurement items".

The above described embodiments of the invention have the following characteristics.

(1) The reagent weight is measured, and this weight is compared with the required quantity of reagent calculated from the measurement items of the set specimens, and the specimen processing is controlled accordingly. Therefore, shortage of liquid in the midst of processing may be avoided. Hence, waste of specimen and reagent may be prevented, and re-measurement (re-inspection) is not required.

(2) Specimen processing may be done either for individual specimens or for specimen groups, which is very efficient.

(3) If there is a sub reagent container, it is possible, when the liquid runs short in the main reagent container, to automatically change over to the sub reagent container, so that it is not necessary to interrupt (stop) the measurement.

Having described preferred embodiments of the invention with reference to the accompanying drawings, it is to be understood that the invention is not limited to those precise embodiments, and that various changes and modifications may be effected thereto by one skilled in the art without departing from the invention.

## Claims

1. An automatic analyzer (10) connectable to a liquid container (12), the automatic analyzer comprising:
   a weight sensor (16) for measuring the current weight of the liquid container;
   memory means (20) for storing empty weight data (m) of the liquid container (12);
   remaining quantity calculating means (22) for determining the remaining liquid quantity (Q) of the liquid container (12) from current weight data (M) obtained from the weight sensor (16) and the empty weight data (m);
   setting means (24) for setting measurement items for a specimen;
   required quantity calculating means (26) for determining a required liquid quantity (D) for the specimen, based on the measurement items set in the setting means (24);
   judging means (28) for comparing the remaining liquid quantity (Q) determined by the remaining quantity calculating means (22) and the required liquid quantity (D) determined by the required quantity calculating means (26), and judging whether or not to process the specimen; and
   display means (30) for displaying the judgement result (W) of the judging means (28).

2. An automatic analyzer (50) connectable to main and auxiliary liquid containers (12a, 12b) through a valve (V), the automatic analyzer comprising:
   a weight sensor (16) for measuring the current weight of the main liquid container (12a);
   memory means (20) for storing empty weight data (ma) of the main liquid container (12a);
   remaining quantity calculating means (22) for determining the remaining liquid quantity (Qa) of the main liquid container (12a) from current weight data (Ma) obtained from the weight sensor (16) and the empty weight data (ma);
   setting means (24) for setting measurement items for a specimen;
   required quantity calculating means (26) for determining a required liquid quantity (D) for the specimen, based on the measurement items set in the setting means (24);
   judging means (52) for comparing the remaining liquid quantity (Qa) determined by the remaining calculating means (22) and the required liquid quantity (D) determined by the required quantity calculating means (26), and judging whether or not to process the specimen; and
   display means (30) for displaying the judgement result (W) of the judging means (52);
   wherein the judging means (52) is arranged, when the remaining liquid quantity (Qa) is greater than the required liquid quantity (D), to position the valve (V) to connect the main container (12a) to the analyzer apparatus and, when the remaining liquid quantity (Qa) is less than the required liquid quantity (D), to change over the position of the valve to connect temporarily the auxiliary liquid container (12b) to the analyzer apparatus.

3. An automatic analyzer (54) connectable to main and auxiliary liquid containers (12a, 12b) through a valve (V), the automatic analyzer comprising:
   weight sensors (16a, 16b) for measuring the current weights of the main and auxiliary liquid containers;
   memory means (20) for storing empty weight data (ma, mb) of the main and auxiliary liquid containers (12a, 12b);
   remaining quantity calculating means (22a) for determining the remaining liquid quantity (Qa) of the main liquid container (12a) from current weight data (Ma) obtained from one of the weight sensors (16a) and the empty weight data (ma) for the main liquid container (12a);

remaining quantity calculating means (22b) for determining the remaining liquid quantity (Qb) of the auxiliary liquid container (12b) from current weight data (Mb) obtained from the other weight sensor (16b) and the empty weight data (mb) for the auxiliary liquid container (12b);

setting means (24) for setting measurement items for a specimen;

required quantity calculating means (26) for determining a required liquid quantity (D) for the specimen, based on the measurement items set in the setting means (24);

judging means (58) for comparing the remaining liquid quantities (Qa, Qb) determined by the two remaining quantity calculating means (22a, 22b) and the required liquid quantity (D) determined by the required quantity calculating means (26), and judging whether or not to process the specimen; and

display means (30) for displaying the judgement result (W) of the judging means (58);

wherein the judging means (58) is arranged, when the remaining liquid quantity (Qa or Qb) of one of the liquid containers (12a or 12b) is not enough, to change over the position of the valve (V) to connect temporarily the other reagent container (12b or 12a) to the analyzer apparatus.

4. An automatic analyzer according to claim 1, 2 or 3, wherein the remaining quantity calculating means (22, 22a, 22b), required quantity calculating means (26) and judging means (28, 52, 58) are combined in an operation processor (21).

5. A method of operating an automatic analyzer (10, 50, 54), comprising the automatic analyzer performing the steps of:
(a) determining the amount of liquid in one or more first containers (12, 12a, 12b), this amount hereinafter being called the first amount (Q);
(b) determining the amount of liquid needed to process a specimen, this amount hereinafter being called the second amount (D); and
(c) comparing the first and second amounts (Q, D) and thereby judging whether or not to process the specimen.

6. A method according to claim 5, further comprising the automatic analyzer performing the step of:
(d) if the judgement in step (c) is negative, operating a valve (V) to switch over from the first liquid container(s) (12a) to one or more second liquid containers (12b).

7. A method according to claim 5, wherein step (a) comprises determining the individual amounts (Qa, Qb) of liquid in main and auxiliary liquid containers (12a, 12b) and adding the individual amounts to calculate the first amount, and the method further comprises the automatic analyzer performing the step of:
(d) when the individual amount (Qa) of liquid in the main container (12a) is zero, operating a valve (V) to switch over from the main container (12a) to the auxiliary container (12b).

8. A method according to any one of claims 5 to 7, wherein determining the amount (Q, Qa, Qb) of liquid in a liquid container (12, 12a, 12b) comprises weighing the liquid container and subtracting its weight when empty.

9. A method according to any one of claims 5 to 8, wherein step (b) is repeated to produce a plurality of second amounts corresponding to respective specimens and, in step (c), if the total of the second amounts exceeds the first amount, the judgement is made not to process a sufficient number of the specimens as to reduce the total of the remaining second amount(s) to the same as or less than the first amount.

10. A method according to claim 9, wherein the automatic analyzer ranks the second amounts in accordance with the priority status of the associated specimens and, in step (c), if the total of the second amounts exceeds the first amount, the judgement as to which of the specimens not to process involves giving processing priority to higher priority status specimen(s) as compared with lower priority status specimen(s).

FIG. I

FIG.2

## FIG.3

## FIG.5

FIG.4

FIG.6

## FIG. 7